# EUROPEAN PATENT APPLICATION

(11) **EP 4 039 587 A1**
(43) Date of publication of application: **10.08.2022**
(21) Application number: 21400003.6
(22) Date of filing: 03.02.2021
(51) Int. Cl.: B64C 27/605, B64C 27/06

(54) **A SWASHPLATE ASSEMBLY WITH INTEGRATED ELECTRIC MOTOR**

(71) Applicant: AIRBUS HELICOPTERS DEUTSCHLAND GmbH, 86609 Donauwörth (DE)
(72) Inventor: BUESING, Moritz, 86154 Augsburg (DE)
(74) Representative: Pouillot, Laurent Pierre Paul

(57) **Abstract**

The present embodiments relate to a swashplate assembly 11, that includes an integrated electric motor 100. The present embodiments also relate to a multi-blade rotor 1a for a rotary-wing aircraft 1 with such a swashplate assembly 11 and to a rotary-wing aircraft 1 with such a multi-blade rotor 1a. The swashplate assembly 11 may include a rotating plate 12b that is mounted to the rotor shaft 1e and rotates in operation with the rotor shaft 1e, a stationary plate 12a that is coupled to the rotating plate 12b by means of bearings 33, and an electric motor 100 that generates torque for driving the rotor shaft 1e. The electric motor 100 comprises a stator 110 that is mounted to one of the stationary or the rotating plates 12a, 12b, and a rotor 120 that is mounted to the other one of the stationary or rotating plates 12a, 12b.

Abstract figure: Figure 3

## Description

The present embodiments relate to a swashplate assembly, and, more particularly, to a swashplate assembly for adjusting collective and cyclic pitch of rotor blades of a multi-blade rotor with an integrated electric motor. The present embodiments also relate to a multi-blade rotor for a rotary-wing aircraft with such a swashplate assembly and to a rotary-wing aircraft with such a multi-blade rotor.

Conventional rotary-wing aircrafts are usually powered by internal combustion engines that rely on the combustion of energy-dense fuels that are often derived from fossil fuels. Recently, rotary-wing aircrafts with electric powertrains or hybrid electric powertrains have emerged. Hybrid electric powertrains usually combine an internal combustion engine with an electric engine, while electric powertrains are entirely relying on electric engines.

The advantages of hybrid electric powertrains or completely electric powertrains over a conventional powertrain based on an internal combustion engine include the lowering of noise levels at least during critical phases of flight (e.g., for flights at low altitude over a densely populated area), an increase in efficiency, which reduces the fuel consumption or increases the range, and the reduction in fossil fuel consumption.

Hybrid electric powertrains also have an increased performance compared to internal combustion engines, allowing for increasing the in-flight weight of the rotary-wing aircraft. Thus, more passengers and/or more cargo may be transported with a rotary-wing aircraft with a hybrid electric powertrain compared to a rotary-wing aircraft with a conventional internal combustion engine.

In addition, hybrid electric powertrains may increase the safety of a rotary-wing aircraft. For example, if one of the electric or internal combustion engine fails, the remaining functioning engine may provide for a safe emergency landing system.

Document US 2019/0023384 A1 describes an electric propulsion system that includes a static mast defining an axis of rotation and a stationary rotor hub assembly coupled to the static mast. A rotating system is rotatably mounted to the stationary rotor hub assembly. The electric propulsion system additionally includes an electric motor including a stator assembly associated with the rotor hub assembly and a rotor assembly associated with the rotating system.

Document US 2019/0389570 A1 describes an electric propulsion system including a stationary rotor hub assembly and a rotating system mounted to the stationary rotor hub assembly. The rotating system is rotatable about an axis. An electric motor including a stator assembly is associated. with the rotor hub assembly and a rotor assembly of the electric motor is associated with the rotating system. A swashplate assembly having a dynamic component is integrated into the rotor hub assembly.

Document EP 2 571 761 A1 describes rotors of a helicopter that are directly connected to electric high-torque machines and that are driven by the same. The energy generation and rotor drive are separate from each other. The high-torque machine of the main rotor is mounted on the cabin roof in an articulated manner such that it can be tilted together with the main rotor.

In addition to being driven by engines, the rotors of a rotary-wing aircraft also need to receive control inputs from a control system. An example for such a control system is a control system for controlling the pitch of rotor blades of a multi-blade rotor in a rotary-wing aircraft.

A control system for controlling collective and cyclic pitch of rotor blades of a multi-blade rotor in a rotary-wing aircraft, in particular of rotor blades of a main rotor in a helicopter, is used in operation for rotating the rotor blades integrally around associated blade pitch control longitudinal axes by means of suitable pitch levers associated with the rotor blades that are operated by corresponding pitch control rods.

Each pitch control rod is, therefore, connected to a rotating plate. The rotating plate rotates in operation with and around a rotor axis of the rotor. This rotating plate is mounted to rotate on a stationary plate, which is restrained against any rotation around the rotor axis of the rotor by a connection connecting the stationary plate to a non-rotatable underlying structure of the rotary-wing aircraft, such as its fuselage or main gear box.

The rotating plate and the stationary plate define a so-called swashplate assembly and are usually annular and surround the rotor axis. This swashplate assembly is activatable by means of a suitable control input unit via associated control actuators for respectively controlling the collective pitch and the cyclic pitch of the rotor blades.

More specifically, the swashplate assembly is adapted to transfer control inputs from a non-rotating system that includes the suitable control input unit and the stationary plate to a rotating system that includes the rotating plate and, when being mounted to the rotary-wing aircraft, also the rotor blades of the multi-blade rotor, i.e. the rotatable rotor as such.

The rotating and stationary plates are usually displaceable axially parallel to the rotor axis for controlling collective pitch, and they can be tilted in any direction around the rotor axis for controlling cyclic pitch, by means of an axially displaceable central spherical bearing. The latter, on which the stationary plate is mounted in an oscillating manner, is generally centered on the rotor axis.

In such control systems, corresponding control inputs to the swashplate assembly can be mixed by a control input unit that is embodied e.g. as a so-called mixing lever gear unit and arranged underneath the swashplate assembly.

For collective pitch control, i.e. a change of the pitch angle of the rotor blades independent of the angular position around the rotor axis, the sliding sleeve can be displaced axially parallel to a rotor axis of the associated rotor by a mixing lever gear unit fork of the mixing lever gear unit. For cyclic pitch control, i.e. a change of the pitch angle of the rotor blades based on the angular position of the rotor blades around the rotor axis, the mixing lever gear unit may tilt the swashplate.

Since the swashplate assembly includes a stationary portion and a rotating portion, electric generators have been associated with swashplate assemblies in the past.

For example, document EP 2 550 199 A1 describes a swashplate system that includes a rotating outer ring and a non-rotating inner ring, the rotating outer ring being adapted to carry a coil of wire and the non-rotating inner ring being adapted to carry a first and a second magnet. The first and second magnets create a magnetic field and an electrical current is created as the coil of wire passes through the magnetic field as the rotating outer ring rotates. In other words, the alternator is carried by the swashplate system, but not integrated into the swashplate.

In contrast thereto, document EP 3 284 672 A1 describes a swashplate system for a helicopter with a swashplate and a power generating device having at least one magnetic device that is arranged on a first surface of a first plate of the swashplate, and at least one induction coil means that is arranged on a second surface of a second plate of the swashplate. The magnetic device and the induction coil device are each configured as a thin-film component, as a printed electronic component, or as a screenprinted component. Furthermore, a rotor system of a helicopter is described, which has such a swashplate system.

The objective of this invention is to provide an electric motor for driving a multi-blade rotor of a rotary-wing aircraft. The electric motor should rotate at the same speed as the rotor. Moreover, the electric motor has a gap between a stator and a rotor that should be held as constant as possible to guarantee the functioning of the electric motor and to avoid collisions. Furthermore, the electric motor should be isolated from the flight loads of the rotor to ensure an approximately constant gap size.

This objective is solved by a new swashplate assembly. More specifically, a swashplate assembly for adjusting collective and cyclic pitch of rotor blades of a multi-blade rotor of a rotary-wing aircraft, wherein the multi-blade rotor comprises a rotor shaft that defines a rotor axis, and wherein the multi-blade rotor rotates in operation around the rotor axis in a first rotation direction, comprises bearings; a rotating plate that is mounted to the rotor shaft and rotates in operation with the rotor shaft around a swashplate axis in the first rotation direction; a stationary plate that is coupled to the rotating plate by means of the bearings that prevent rotating of the stationary plate with the rotor shaft;, and an electric motor that generates torque for driving the rotor shaft. The electric motor comprises a stator that is mounted to one of the stationary or the rotating plates, and a rotor that is mounted to the other one of the stationary or rotating plates.

The presented swashplate assembly advantageously uses the synergies between a large direct drive electric engine and a swashplate structure. For example, both, the electric engine and the swashplate structure, include large rings and need appropriate space, require large bearings, need to be stiff, and need to be decoupled from the flight loads with the exception of the control loads for the swashplate. Thus, the presented swashplate assembly with integrated electric motor is lighter and requires less space than a solution with separate swashplate and electric motor.

The basic structure of the swashplate remains unchanged. The cylindrical interface area between the bearing ring and the control ring is extended, and stator ring and the rotor ring of the electric engine is integrated in the extended space. The stator ring is placed on the bearing ring, and the rotor ring is placed on the control ring.

The torque is transferred via the rotating scissors to the rotor. The torque is reacted via non-rotating scissors, a sliding sleeve unit, or similar common components of state-of-the-art swashplates. These scissor units and similar parts need to be sized for the additional engine torque. Therefore, the scissor units and similar parts are larger and heavier compared to the corresponding parts in a conventional swashplate assembly.

Elastic power cables, control cables, and potentially coolant hoses connect the bearing ring and stator with the rest of the rotary-wing aircraft.

According to one aspect, the swashplate assembly further comprises a non-rotating sliding sleeve that is mounted axially displaceable parallel to the rotor axis on the rotor shaft and adapted to enabling a translational motion of the rotating plate and the stationary plate parallel to the rotor axis to adjust the collective pitch angle of the rotor blades; and at least one of a spherical bearing or a cardan suspension being provided on the non-rotating sliding sleeve and adapted to enabling a tilting motion of the rotating plate and the stationary plate relative to the rotor axis to adjust the cyclic pitch angle of the rotor blades.

According to one aspect, the swashplate assembly further comprises a freewheel clutch that is coupled between the electric motor and the stationary plate and that decouples the electric motor from the stationary plate when the rotor shaft rotates faster than the electric motor.

According to one aspect, the swashplate assembly further comprises a freewheel clutch that is coupled between the electric motor and the rotor shaft and that transfers torque from the electric motor to the rotor shaft only in the first rotation direction, and wherein the freewheel clutch decouples the electric motor from the rotor shaft when the rotor shaft rotates faster than the electric motor.

According to one aspect, the stator is mounted to the stationary plate and the rotor is mounted to the rotating plate.

According to one aspect, the rotor includes an electromagnet.

According to one aspect, the swashplate assembly further comprises sliding electrical contacts that supply power to the electromagnet.

According to one aspect, the bearings are located along the swashplate axis between the electric motor and the rotor blades.

According to one aspect, the electric motor is located along the swashplate axis between the bearings and the rotor blades.

According to one aspect, the electric motor is located along the swashplate axis between a first portion of the bearings and a second portion of the bearings.

According to one aspect, the rotor and the stator are arranged at the same distance from the rotor shaft.

According to one aspect, the rotor and the stator are arranged at different distances from the rotor shaft.

Furthermore, a multi-blade rotor for a rotary-wing aircraft, comprises a rotor shaft that rotates in operation around an associated rotor axis in a first rotation direction, a rotor head, rotor blades that are mounted at the rotor head to the rotor shaft, and the swashplate assembly for adjusting collective and cyclic pitch of the rotor blades described above.

Moreover, a rotary-wing aircraft comprises the multi-blade rotor described above.

According to one aspect, the rotary-wing aircraft further comprises a combustion engine that drives the rotor shaft.

Embodiments are outlined by way of example in the following description with reference to the attached drawings. In these attached drawings, identical or identically functioning components and elements are labeled with identical reference numbers and characters and are, consequently, only described once in the following description.
- Figure 1 is a diagram of an illustrative rotary-wing aircraft with an illustrative swashplate assembly and an enlarged perspective view of the illustrative swashplate assembly in accordance with some embodiments,
- Figure 2 is a diagram showing a schematic side view of a simplified version of the illustrative swashplate assembly of Figure 1 in accordance with some embodiments,
- Figure 3 is a diagram of an illustrative swashplate assembly with an electric motor between the bearings of a swashplate in accordance with some embodiments,
- Figure 4 is a diagram of an illustrative swashplate assembly with an electric motor above the bearings of a swashplate in accordance with some embodiments,
- Figure 5 is a diagram of an illustrative swashplate assembly with an electric motor below the bearings of a swashplate in accordance with some embodiments,
- Figure 6 is a diagram of an illustrative swashplate assembly with an electric motor having a flat circular interface in accordance with some embodiments, and
- Figure 7 is a diagram of an illustrative swashplate assembly with an electric motor and a freewheel clutch in accordance with some embodiments.

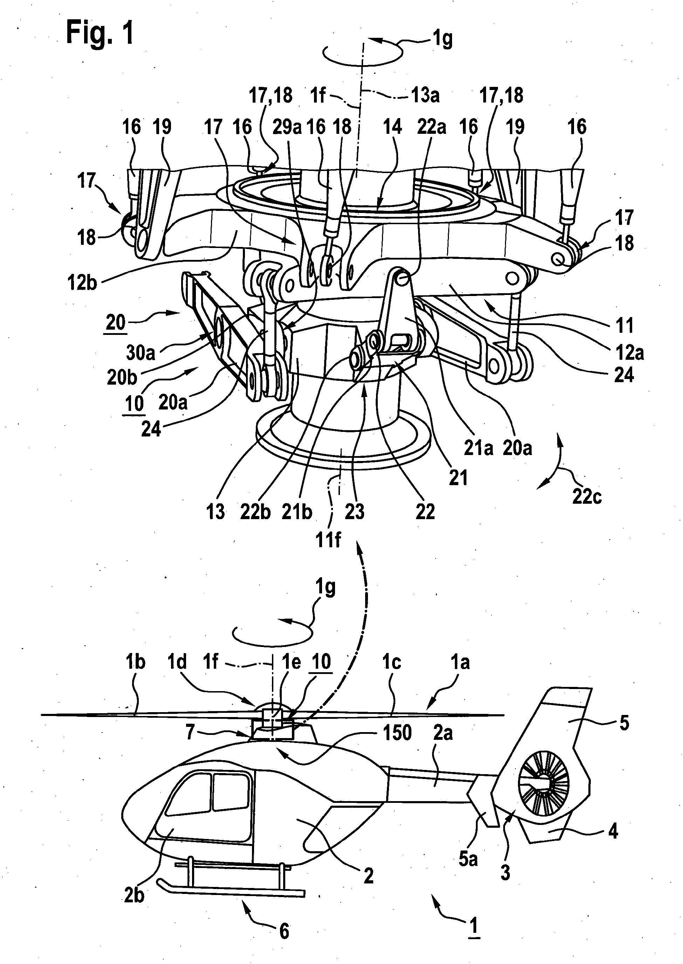

Figure 1 shows an illustrative rotary-wing aircraft 1 with a fuselage 2 that is connected to a landing gear 6, said fuselage 2 defining a tail boom 2a and a cabin 2b. The rotary-wing aircraft 1 comprises at least one multi-blade rotor 1a for providing lift and forward or backward thrust during operation.

The at least one multi-blade rotor 1a comprises rotor blades 1b, 1c that are mounted at an associated rotor head 1d to a rotor shaft 1e. The rotor shaft 1e rotates in operation of the rotary-wing aircraft 1 around an associated rotor axis 1f in a rotation direction 1g.

Illustratively, rotary-wing aircraft 1 may include a combustion engine 150 that drives the rotor shaft 1e. Combustion engine 150 may be an internal combustion engine 150 in which a combustion in a combustion chamber applies a direct force to some component of the engine and from there to the rotor shaft 1e.

By way of example, the rotary-wing aircraft 1 is embodied as a helicopter, which comprises at least one preferentially shrouded counter-torque device 3. The at least one counter-torque device 3 may be configured to provide counter-torque during operation, i.e. to counter the torque created by rotation of the at least one multi-blade rotor 1a for purposes of balancing the rotary-wing aircraft 1 in terms of yaw.

The at least one counter-torque device 3 is illustratively provided at an aft section of the tail boom 2a, which preferably further comprises a bumper 4, a tail wing 5a, and a fin 5. The tail wing 5a is preferably adjustable in its inclination and can, thus, overtake the functioning of a horizontal stabilizer. Alternatively, or in addition, the rotary-wing aircraft 1 is provided with a suitable horizontal stabilizer.

However, it should be noted that the at least one counter-torque device 3, the tail wing 5a as well as the fin 5 with the bumper 4 provided at the aft section of the tail boom 2a are merely described for illustrating one exemplary embodiment of the rotary-wing aircraft 1 and not for limiting the invention accordingly. Instead, the present invention as described hereinafter can likewise be applied to any rotary-wing aircraft and, in particular, any helicopter, independent of a respective construction of the aft section thereof.

According to one aspect, the rotary-wing aircraft 1 comprises a control system 10 for controlling collective and cyclic pitch of the rotor blades 1b, 1c of the at least one multi-blade rotor 1a. The control system 10, which is further detailed in an enlarged perspective detail view, may exemplarily be arranged between the rotor head 1d of the at least one multi-blade rotor 1a and a main gear box 7 of the rotary-wing aircraft 1.

Illustratively, the control system 10 may include a swashplate assembly 11 for adjusting collective and cyclic pitch of rotor blades 1b, 1c of multi-blade rotor 1a. Swashplate assembly 11 may include at least one stationary plate 12a and at least one rotating plate 12b that is mounted rotatably to the at least one stationary plate 12a.

By way of example, the at least one rotating plate 12b defines an upper swashplate and the at least one stationary plate 12a defines a lower swashplate of this swashplate assembly 11. The at least one non-rotating and rotating plates 12a, 12b may be at least partly disk-shaped and connected to each other by means of an associated roller or ball bearing that allows relative rotational movement between these plates 12a, 12b.

In this configuration, the at least one non-rotating and rotating plates 12a, 12b may be mainly superposed. However, they can also, or alternatively, be at least partly ring-shaped. In such a configuration, the at least one rotating plate 12b mainly encompasses the at least one stationary plate 12a.

Illustratively, the at least one rotating plate 12b and the at least one stationary plate 12a are mounted to a non-rotating sliding sleeve 13 having an associated sliding sleeve axis 13a. This non-rotating sliding sleeve 13 is preferably adapted to be, and illustratively is, mounted axially displaceable parallel to the rotor axis 1f on the rotor shaft 1e.

By way of example, the at least one rotating plate 12b is rotatable around the associated sliding sleeve axis 13a of the non-rotating sliding sleeve 13 and mounted with the at least one stationary plate 12a to a spherical bearing 14 that is provided on the non-rotating sliding sleeve 13. For instance, the spherical bearing 14 is embodied as a ball joint with a ball, which is rigidly attached to the non-rotating sliding sleeve 13 or integrally formed in one piece therewith.

If desired, the at least one rotating plate 12b is rotatable around the associated sliding sleeve axis 13a of the non-rotating sliding sleeve 13 and mounted with the at least one stationary plate 12a to a cardan suspension that is provided on the non-rotating sliding sleeve 13.

Illustratively, the at least one rotating plate 12b and the at least one stationary plate 12a define a swashplate axis 11f and are mounted to the spherical bearing 14 or to the cardan suspension such that they may be tilted in any direction around the associated sliding sleeve axis 13a by means of said spherical bearing 14 or cardan suspension.

Thus, the sliding sleeve axis 13a coincides with, or is at least parallel to, the rotor axis 1f, whereas the swashplate axis 11f coincides with, or is at least parallel to, the rotor axis 1f only in a normal cyclic pitch adjustment position of the swashplate 11 (i.e., when the swashplate 11 receives no control input for adjusting the cyclic pitch of the rotor blades 1b, 1c). However, any control input for adjusting the cyclic pitch of the rotor blades 1b, 1c leads to a tilting of the swashplate axis 11f relative to the rotor axis 1f and the sliding sleeve axis 13a in tilting directions 22c.

Therefore, upon receipt of a control input for adjusting the cyclic pitch of the rotor blades 1b, 1c, the swashplate axis 11f is tilted relative to the rotor axis 1f in tilting directions 22c, and the rotating plate 12b rotates in operation with the rotor shaft 1e around the swashplate axis 11f in a rotation direction 1g.

Allowable tilting angles between the swashplate axis 11f and the rotor axis 1f may be selected to be smaller than 40°, preferably the tilting angles are selected to be smaller than 20°.

The at least one rotating plate 12b is preferably connectable, and illustratively connected, to each one of the rotor blades 1b, 1c by means of an associated pitch control rod 16. Therefore, external radial clevises 17, equal in number to the rotor blades 1b, 1c, are distributed over an external periphery of the at least one rotating plate 12b, preferentially evenly, and in each such external radial clevis 17 a ball joint 18 is held, which articulates a lower end of an associated pitch control rod 16, while its upper end can be articulated, and is illustratively articulated, in a pitch lever of an associated one of the rotor blades 1b, 1c, preferentially also in a ball joint.

Furthermore, the at least one rotating plate 12b is at least indirectly rotatably connectable, and is illustratively connected, to the rotor shaft 1e of the multi-blade rotor 1a. For example, the at least one rotating plate 12b is connected to the rotor shaft 1e of the multi-blade rotor 1a by means of at least one associated rotating torque link, which is by way of example embodied as a rotating arm 19.

For controlling tilting and/or axial displacement of the at least one rotating plate 12b and the at least one stationary plate 12a in operation, a control input unit 20 is provided. This control input unit 20 may include two actuator arms 20a and at least one fork unit 20b. Thus, the control input unit 20 is illustratively embodied as a so-called mixing lever gear unit.

Each actuator arm 20a is illustratively embodied as a lateral or outer arm of the control input unit 20. If desired, each actuator arm 20a may be pivotally connected to the at least one fork unit 20b, which is illustratively embodied as an inner fork, by means of an associated actuator arm pivot bearing 30a.

Illustratively, the at least one actuator arm 20a may be connected to the at least one stationary plate 12a by means of associated swashplate control rods 24 for controlling tilting of the at least one stationary plate 12a and, thus, of the at least one rotating plate 12b in any required tilting direction 22c around the rotor axis 1f, thereby performing cyclic pitch control of the rotor blades 1b, 1c.

By way of example, the at least one fork unit 20b may be provided for controlling axial displacement of the non-rotating sliding sleeve 13 in operation. Therefore, the at least one fork unit 20b may be rotatably connected to a mounting part 23 of the non-rotating sliding sleeve 13 at a corresponding mounting point 29a by means of an associated fork pivot bearing.

Illustratively, at least one non-rotating scissors 21 is provided for non-rotatably connecting the non-rotating sliding sleeve 13 to the at least one stationary plate 12a. The at least one non-rotating scissors 21 may be adapted to inhibit relative rotational movement between the at least one stationary plate 12a and the non-rotating sliding sleeve 13 around the associated sliding sleeve axis 13a.

Therefore, as shown in Figure 1, the at least one non-rotating scissors 21 is mounted to the at least one stationary plate 12a. If desired, the at least one non-rotating scissors 21 is mounted directly to said non-rotating sliding sleeve 13. For instance, the at least one non-rotating scissors 21 is mounted to the mounting part 23 of the non-rotating sliding sleeve 13.

However, it should be noted that the at least one non-rotating scissors 21 must not necessarily be mounted directly to said non-rotating sliding sleeve 13, but can alternatively be mounted to any other non-rotatable part of the control system 10. For instance, the at least one non-rotating scissors 21 can be mounted to the associated fork pivot bearing, the at least one fork unit 20b, the corresponding fork mounting point 29a, and so on.

If desired, the at least one non-rotating scissors 21 may include at least a first and a second stop arm section 21a, 21b. Illustratively, the at least one first stop arm section 21a is embodied as an upper arm of the at least one non-rotating scissors 21 and the at least one second stop arm section 21b is embodied as a lower arm thereof.

Illustratively, the upper arm 21a is connected to the lower arm 21b by a first associated bearing, e.g. an associated scissors hinge 22. The upper arm 21a may further be mounted to the at least one stationary plate 12a by means of a second associated bearing, e.g. an associated spherical bearing 22a. The lower arm 21b may further be mounted to the non-rotating sliding sleeve 13 by means of a third associated bearing, e.g. an associated pivot bearing 22b.

It should be noted that the above described configuration and fixation of the at least one non-rotating scissors 21 is merely described for purposes of illustration and not for restricting the invention solely thereto. Instead, various modifications and variations are readily available and recognizable to the skilled person and, therefore, also considered as being part of the present invention.

For instance, in one exemplary configuration, the hinge 22 can be replaced with a ball bearing. In another configuration, the spherical bearing 22a can be replaced with a hinge and the pivot bearing 22b can be replaced with a spherical or ball bearing, and so on.

Illustratively, the swashplate assembly 11 may include an electric motor. The electric motor may generate torque for driving the rotor shaft 1e.

By way of example, the electric motor may include a stator and a rotor. The stator may be mounted to either one of the at least one stationary plate 12a or the at least one rotating plate 12b. The rotor may be mounted to the other one of the at least one stationary plate 12a or the at least one rotating plate 12b.

Illustratively, the torque from the electric motor may be transferred by means of at least one associated rotating torque link. For example, rotating arm 19 may transfer the torque from the electric motor to the rotor shaft 1e.

If desired, the torque may be transferred from the electric motor to the rotor shaft 1e by other means. For example, the torque may be transferred from the electric motor to the rotor shaft 1e via non-rotating scissors, a sliding sleeve unit, or similar common components of state-of-the-art swashplates.

Illustratively, the torque transferring components such as scissor units and similar parts need to be sized appropriately to enable and support the transmission of torque from the electric motor to the rotor shaft 1e. Therefore, the torque transferring components may be larger and heavier compared to the corresponding parts in a conventional swashplate assembly.

By way of example, the rotary-wing aircraft 1 may include power cables, control cables, and potentially coolant hoses that connect the stationary plate 12a and the stator of the electric motor with the rest of the rotary-wing aircraft 1.

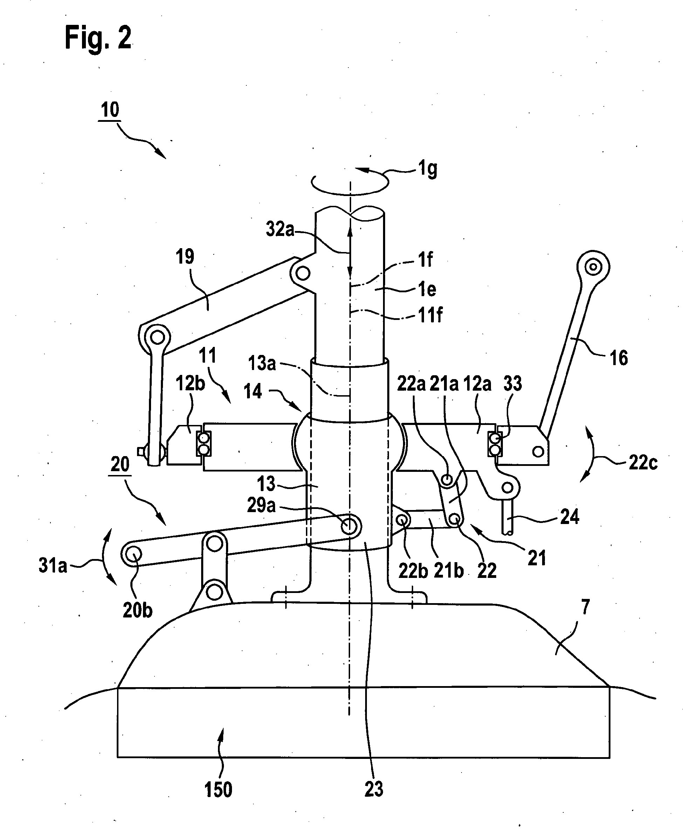

Figure 2 shows a simplified schematic view of the control system 10 of Figure 1 for further illustrating the possible pivoting directions 31a of the control input unit 20, the possible axial displacement directions 32a of the non-rotating sliding sleeve 13 and the possible swashplate tilting directions 22c of the swashplate assembly 11.

Figure 2 also illustrates the comparatively short and small configuration of the at least one non-rotating scissors 21. Figure 2 further illustrates an exemplary bearing of the at least one rotating plate 12b of the swashplate assembly 11 at its at least one stationary plate 12a by means of a roller bearing 33, in particular a ball bearing.

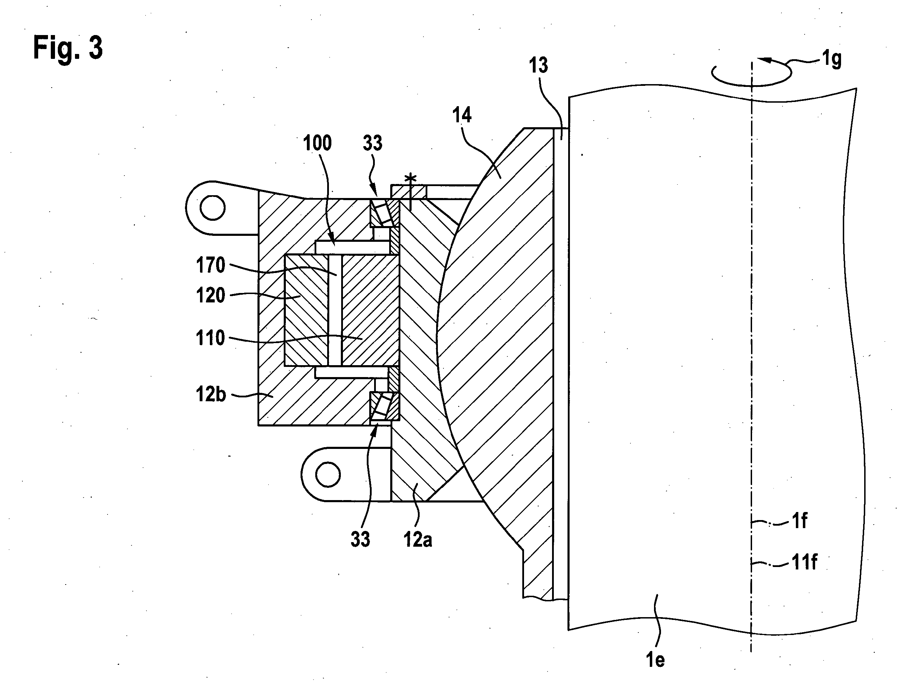

If desired, the swashplate assembly 11 of Figure 2 may include an electric motor. Figure 3 is a diagram of an illustrative swashplate assembly 11 with an electric motor 100 between the bearings 33.

The swashplate assembly 11 may adjust collective and cyclic pitch of rotor blades of a multi-blade rotor of a rotary-wing aircraft (e.g., rotor blades 1b, 1c of multi-blade rotor 1a of rotary-wing aircraft 1 of Figure 1). Illustratively, the multi-blade rotor may include a rotor shaft 1e that defines a rotor axis 1f. In operation, the multi-blade rotor rotates in operation around the rotor axis 1f in a first rotation direction.

As shown in Figure 3, the swashplate assembly 11 includes bearings 33. Bearings 33 may exemplarily be implemented by one or more ball bearings.

Illustratively, the swashplate assembly 11 further includes a rotating plate 12b that is mounted to the rotor shaft 1e and rotates in operation with the rotor shaft 1e around a swashplate axis 11f in the first rotation direction 1g. Moreover, the swashplate assembly 11 includes a stationary plate 12a that is coupled to the rotating plate 12b by means of the bearings 33. The bearings 33 prevent rotating of the stationary plate 12a with the rotor shaft 1e.

By way of example, the swashplate assembly 11 may include a non-rotating sliding sleeve 13 that is mounted axially displaceable parallel to the rotor axis 1f on the rotor shaft 1e. The non-rotating sliding sleeve 13 may be adapted to enabling a translational motion of the rotating plate 12b and the stationary plate 12a parallel to the rotor axis 1f to adjust the collective pitch angle of the rotor blades.

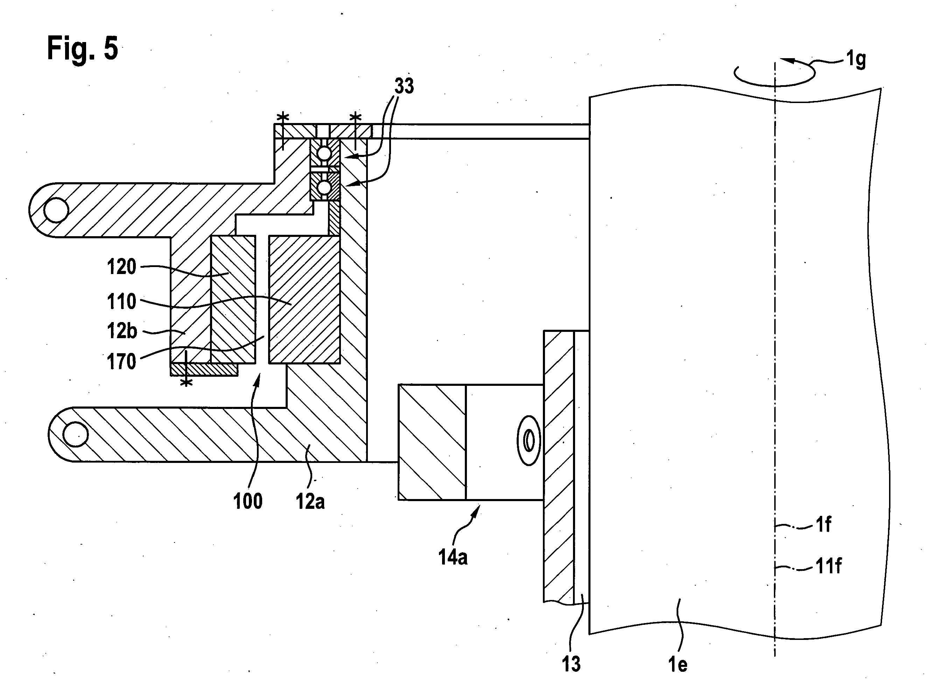

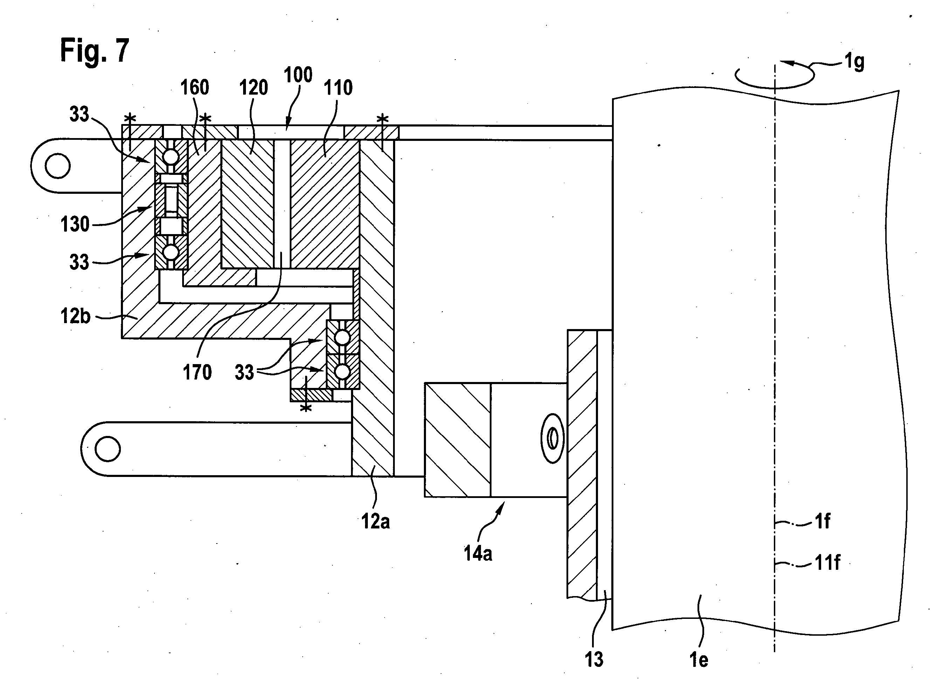

Illustratively, the swashplate assembly 11 may include at least one of a spherical bearing 14 or a cardan suspension (e.g., cardan suspension 14a of Figure 5 or Figure 7). The at least one of a spherical bearing 14 or a cardan suspension may be provided on the non-rotating sliding sleeve 13 and adapted to enabling a tilting motion of the rotating plate 12b and the stationary plate 12a relative to the rotor axis 1f to adjust the cyclic pitch angle of the rotor blades.

The swashplate assembly 11 further includes an electric motor 100 that generates torque for driving the rotor shaft 1e. The electric motor 100 may be any electric motor that is adapted to generate torque for driving the rotor shaft 1e. For example, the electric motor 100 may be powered by direct current (DC) sources or alternating current (AC) sources, brushed or brushless, single-phase, two-phase, or three-phase, etc.

The electric motor 100 includes a stator 110 and a rotor 120. Illustratively, stator 110 and/or rotor 120 may include windings. For example, the windings may include wires that are laid in coils and wrapped around a magnetic core so that magnetic poles are formed when an electric current flows through the wires. If desired, stator 110 and/or rotor 120 may include a permanent magnet.

Illustratively, the cylindrical interface area between the stationary plate 12a and the rotating plate 12b may receive the stator 110 and the rotor 120 of the electric motor 100. The stator 110 may be mounted to one of the stationary or the rotating plates 12a, 12b, and the rotor 120 may be mounted to the other one of the stationary or rotating plates 12a, 12b. Stator 110 and rotor 120 may be separated by an air gap 170.

As an example, the stator 110 may be mounted to the stationary plate 12a, and the rotor 120 may be mounted to the rotating plate 12b. As another example, the stator 110 may be mounted to the rotating plate 12b, and the rotor 120 may be mounted to the stationary plate 12a.

As shown in Figure 3, the stator 110 is mounted to the stationary plate 12a, and the rotor 120 is mounted to the rotating plate 12b.

Consider the scenario in which the rotor 120 is mounted to the rotating plate 12b and includes an electromagnet. In this scenario, the swashplate assembly 11 may include sliding electrical contacts 140 that supply power to the electromagnet.

As shown in Figure 3, the electric motor 100 may be located along the swashplate axis 11f between a first portion of bearings 33 and a second portion of bearings 33. However, the electric motor 100 may be located at different positions, if desired.

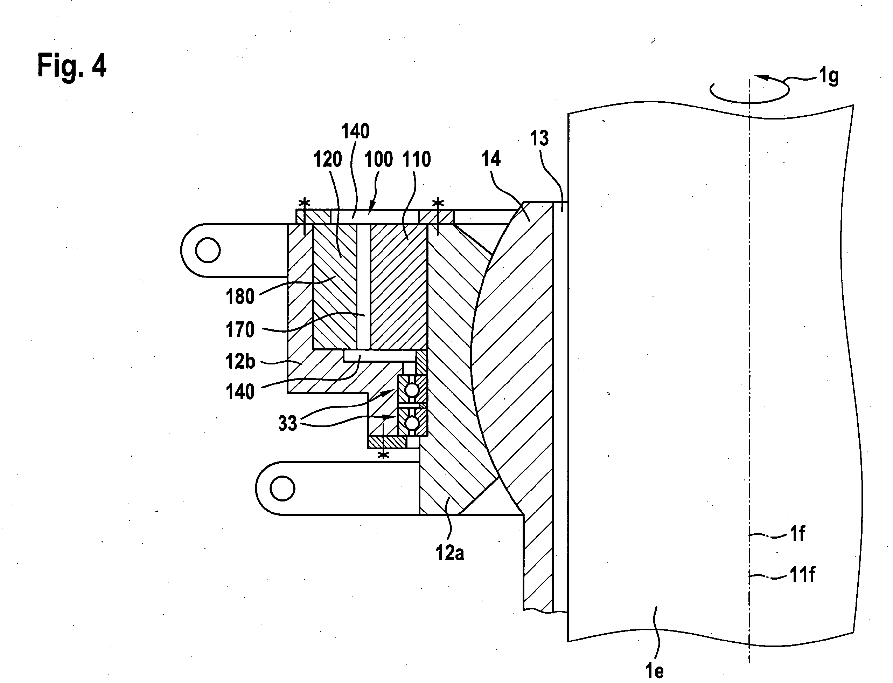

As an example, the electric motor 100 may be located along the swashplate axis 11f between the bearings 33 and the rotor blades as shown in Figure 4. As another example, the electric motor 100 may be located along the swashplate axis 11f such that the bearings 33 are between the electric motor 100 and the rotor blades as shown in Figure 5.

Figure 4 is a diagram of an illustrative swashplate assembly 11 with an electric motor 100 that is located along the swashplate axis 11f above the bearings 33.

The electric motor 100 may include a stator 110 and a rotor 120. The stator 110 may be mounted to the stationary plate 12a, and the rotor 120 may be mounted to the rotating plate 12b.

Illustratively, the rotor 120 may include an electromagnet 180. The electromagnet 180 may include a wire that is wound into a coil. A current through the wire may create a magnetic field which is concentrated in the center of the coil. If desired, the wire may be wound around a magnetic core. Exemplarily, the magnetic core may be made from a ferromagnetic or ferrimagnetic material such as iron.

By way of example, the swashplate assembly 11 may include sliding electrical contacts 140 that supply power to the electromagnet 180. The sliding electrical contacts may include a brush and a slip-ring/commutator. The brush may be stationary (i.e., located on the stationary plate 12a), and the slip-ring or commutator may be rotating (i.e., located on the rotating plate 12b).

As shown in Figure 3 and Figure 4, the swashplate assembly 11 includes a spherical bearing 14 on the non-rotating sliding sleeve 13. The spherical bearing 14 may be adapted to enabling a tilting motion of the rotating plate 12b and the stationary plate 12a relative to the rotor axis 1f to adjust the cyclic pitch angle of the rotor blades. If desired, the swashplate assembly 11 may include a cardan suspension instead of a spherical bearing.

Figure 5 is a diagram of an illustrative swashplate assembly 11 with an electric motor 100 and a cardan suspension 14a. The cardan suspension 14a may be provided on the non-rotating sliding sleeve 13 and adapted to enabling a tilting motion of the rotating plate 12b and the stationary plate 12a relative to the rotor axis 1f to adjust the cyclic pitch angle of the rotor blades.

As shown in Figure 5, the electric motor 100 is located along the swashplate axis 11f such that the bearings 33 are between the electric motor 100 and the rotor blades.

As shown in Figure 3, Figure 4, and Figure 5, the stator 110 and rotor 120 are arranged at different distances from the rotor shaft 1e. As an example, the stator 110 may be arranged at a first distance from the rotor shaft 1e, and the rotor 120 may be arranged at a second distance from the rotor shaft 1e that is greater than the first distance. As another example, the stator 110 may be arranged at a first distance from the rotor shaft 1e, and the rotor 120 may be arranged at a second distance from the rotor shaft 1e that is smaller than the first distance.

Illustratively, the stator 110 may form a first ring around the rotor shaft 1e, and the rotor 120 may form a second ring around the rotor shaft 1e. The first and second ring may be concentric to the swashplate axis 11f. Thus, the first and second ring may have a cylindrical interface between each other. If desired, the stator 110 and the rotor 120 may be arranged at the same distance from the rotor shaft 1e.

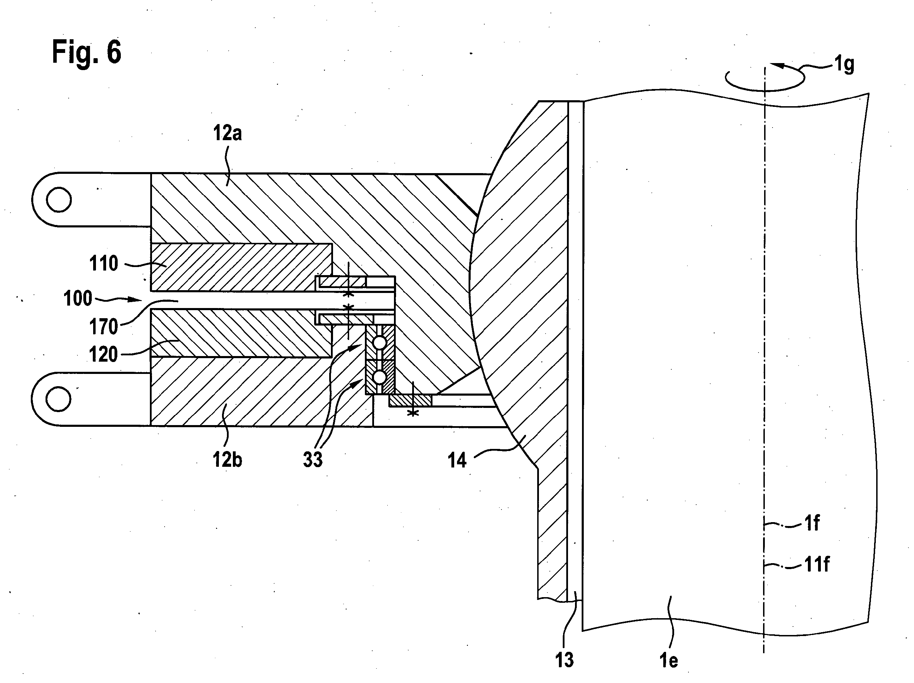

Figure 6 is a diagram of such an illustrative swashplate assembly 11 with an electric motor 100 with stator 110 and rotor 120 arranged at the same distance from the rotor shaft 1e.

By way of example, the stationary plate 12a and the rotating plate 12b may extend radially from the swashplate axis 11f, thereby providing a flat circular space in which the stator 110 and rotor 120 may be arranged.

Illustratively, the stator 110 may form a first ring around the rotor shaft 1e, and the rotor 120 may form a second ring around the rotor shaft 1e. The first and second rings may be located at a same distance from the swashplate axis 11f. In other words, the first and second rings may be located on top of each other. Thus, the first and second rings may have a flat circular interface between each other.

Figure 7 is a diagram of an illustrative swashplate assembly 11 with an electric motor 100 and a freewheel clutch 130. The freewheel clutch 130 may transfer torque only in one direction.

Illustratively, the freewheel clutch 130 may be coupled between the electric motor 100 and the stationary plate 12a. By way of example, the freewheel clutch 130 may be coupled between the electric motor 100 and the rotor shaft 1e. The freewheel clutch 130 may transfer torque from the electric motor 100 to the rotor shaft 1e only in the first rotation direction 1g.

The freewheel clutch 130 may decouple the electric motor 100 from the stationary plate 12a when the rotor shaft 1e rotates faster than the electric motor 100. Thus, the electric motor 100 may be powered down while the multi-blade rotor is rotating.

Illustratively, the rotor 120 of the electric motor 100 may be mounted on an intermediate ring 160. The intermediate ring 160 may be connected to the rotating plate 12b via additional bearings 33 and the freewheel clutch 130. The additional bearings 33 may be ball bearings, if desired.

It should be noted that the above described embodiments are merely described to illustrate possible realizations of the present invention, but not in order to restrict the present invention thereto. Instead, multiple modifications and variations of the described embodiments are possible and should, therefore, also be considered as being part of the invention.

By way of example, the stationary plate 12a with one of stator 110 or rotor 120 and the rotating plate 12b with the other one of stator 110 or rotor 120 of Figure 3 to Figure 7 may be switched by mirroring the diagrams vertically.

Furthermore, only the swashplate assembly 11 of Figure 7 is shown with a freewheel clutch 130. However, any swashplate assembly 11, including the swashplate assemblies 11 shown in Figure 3 to Figure 6 may include a freewheel clutch 130.

Moreover, the swashplate assemblies 11 of Figure 3, Figure 4, and Figure 6 are shown with a spherical bearing 14, while the swashplate assemblies 11 of Figure 5 and Figure 7 are show with a cardan suspension 14a. However, the swashplate assemblies 11 of Figure 3, Figure 4, and Figure 6 may have a cardan suspension 14a, and the swashplate assemblies 11 of Figure 5 and Figure 7 may have a spherical bearing 14, if desired.

### Reference List

- 1: rotary-wing aircraft
- 1a: multi-blade rotor
- 1b, 1c: rotor blades
- 1d: rotor head
- 1e: rotor shaft
- 1f: rotor axis
- 1g: rotation direction
- 2: fuselage
- 2a: tail boom
- 2b: cabin
- 3: counter-torque device
- 4: bumper
- 5: fin
- 5a: tail wing
- 6: landing gear
- 7: main gear box
- 10: control system
- 11: swashplate assembly
- 11f: swashplate axis
- 12a: stationary plate
- 12b: rotating plate
- 13: non-rotating sliding sleeve
- 13a: sliding sleeve axis
- 14: spherical bearing
- 14a: cardan suspension
- 16: pitch control rods
- 17: rotating plate clevises
- 18: rotating plate ball joints
- 19: rotating arms
- 20: control input unit
- 20a: outer actuator arms
- 20b: inner fork
- 21: non-rotating scissors
- 21a: upper arm
- 21b: lower arm
- 22: scissors hinge
- 22a: upper arm spherical bearing
- 22b: lower arm pivot bearing
- 22c: swashplate tilting directions
- 23: sliding sleeve mounting part
- 24: swashplate control rods
- 29a: inner fork mounting point
- 30a: actuator arm pivot bearing
- 31a: control input unit pivot movement directions
- 32a: sliding sleeve movement directions
- 33: roller bearing
- 100: electric motor
- 110: stator
- 120: rotor
- 130: freewheel clutch
- 140: sliding electric contacts
- 150: combustion engine
- 160: intermediate ring
- 170: air gap
- 180: electromagnet

## Claims

1. A swashplate assembly (11) for adjusting collective and cyclic pitch of rotor blades (1b, 1c) of a multi-blade rotor (1a) of a rotary-wing aircraft (1), wherein the multi-blade rotor (1a) comprises a rotor shaft (1e) that defines a rotor axis (1f), and wherein the multi-blade rotor (1a) rotates in operation around the rotor axis (1f) in a first rotation direction (1g), comprising:
bearings (33);
a rotating plate (12b) that is mounted to the rotor shaft (1e) and rotates in operation with the rotor shaft (1e) around a swashplate axis (11f) in the first rotation direction (1g);
a stationary plate (12a) that is coupled to the rotating plate (12b) by means of the bearings (33) that prevent rotating of the stationary plate (12a) with the rotor shaft (1e); and
an electric motor (100) that generates torque for driving the rotor shaft (1e) and comprises:
a stator (110) that is mounted to one of the stationary or the rotating plates (12a, 12b), and
a rotor (120) that is mounted to the other one of the stationary or rotating plates (12a, 12b).

2. The swashplate assembly (11) of claim 1, further comprising:
a non-rotating sliding sleeve (13) that is mounted axially displaceable parallel to the rotor axis (1f) on the rotor shaft (1e) and adapted to enabling a translational motion of the rotating plate (12b) and the stationary plate (12a) parallel to the rotor axis (1f) to adjust the collective pitch angle of the rotor blades (1b, 1c); and
at least one of a spherical bearing (14) or a cardan suspension (14a) being provided on the non-rotating sliding sleeve (13) and adapted to enabling a tilting motion of the rotating plate (12b) and the stationary plate (12a) relative to the rotor axis (1f) to adjust the cyclic pitch angle of the rotor blades (1b, 1c).

3. The swashplate assembly (11) of any one of claims 1 or 2, further comprising:
a freewheel clutch (130) that is coupled between the electric motor (100) and the stationary plate (12a) and that decouples the electric motor (100) from the stationary plate (12a) when the rotor shaft (1e) rotates faster than the electric motor (100).

4. The swashplate assembly (11) of any one of claims 1 or 2, further comprising:
a freewheel clutch (130) that is coupled between the electric motor (100) and the rotor shaft (1e) and that transfers torque from the electric motor (100) to the rotor shaft (1e) only in the first rotation direction (1g), and wherein the freewheel clutch (130) decouples the electric motor (100) from the rotor shaft (1e) when the rotor shaft (1e) rotates faster than the electric motor (100).

5. The swashplate assembly (11) of any one of the preceding claims, wherein the stator (110) is mounted to the stationary plate (12a) and the rotor (120) is mounted to the rotating plate (12b).

6. The swashplate assembly (11) of claim 5, wherein the rotor (120) further comprises an electromagnet (180).

7. The swashplate assembly (11) of claim 6, further comprising:
sliding electrical contacts (140) that supply power to the electromagnet (180).

8. The swashplate assembly (11) of any one of the preceding claims, wherein the bearings (33) are located along the swashplate axis (11f) between the electric motor (100) and the rotor blades (1b, 1c).

9. The swashplate assembly (11) of any one of claims 1 to 7, wherein the electric motor (100) is located along the swashplate axis (11f) between the bearings (33) and the rotor blades (1b, 1c).

10. The swashplate assembly (11) of any one of claims 1 to 7, wherein the electric motor (100) is located along the swashplate axis (11f) between a first portion of the bearings (33) and a second portion of the bearings (33).

11. The swashplate assembly (11) of any one of the preceding claims, wherein the rotor (120) and the stator (110) are arranged at the same distance from the rotor shaft (1e).

12. The swashplate assembly (11) of any one of claims 1 to 10, wherein the rotor (120) and the stator (110) are arranged at different distances from the rotor shaft (1e).

13. A multi-blade rotor (1a) for a rotary-wing aircraft (1), comprising:
a rotor shaft (1e) that rotates in operation around an associated rotor axis (1f) in a first rotation direction (1g);
a rotor head (1d);
rotor blades (1b, 1c) that are mounted at the rotor head (1d) to the rotor shaft (1e); and
the swashplate assembly (11) for adjusting collective and cyclic pitch of the rotor blades (1b, 1c) of any one of the preceding claims.

14. A rotary-wing aircraft (1) comprising the multi-blade rotor (1a) of claim 13.

15. The rotary-wing aircraft (1) of claim 14, further comprising:
a combustion engine (150) that drives the rotor shaft (1e).
